# EUROPEAN PATENT SPECIFICATION

(11) **EP 0 404 316 B1**
(45) Date of publication and mention of the grant of the patent: **22.02.1995**
(21) Application number: 90304606.8
(22) Date of filing: 27.04.1990
(51) Int. Cl.: G06F 9/44, G06F 9/45

(54) **Multiprocessor data processing system**
Multiprozessordatenverarbeitungssystem
Système de traitement de données multiprocesseur

(30) Priority: 22.06.1989 GB 8914353
(43) Date of publication of application: 27.12.1990
(73) Proprietor: INTERNATIONAL COMPUTERS LIMITED, Putney, London, SW15 1SW (GB)
(72) Inventor: Pixton, Martin, Sandbach, Cheshire CW11 0HN (GB); Ward, Michael, Bolton, Lancs BL6 7RF (GB)
(74) Representative: Guyatt, Derek Charles

(56) References cited:
- COMPUTER, vol. 19, no. 8, August 1986, pages 60-70, IEEE, New York, US; P.HUDAK: "Para-functional programming"
- IEEE SOFTWARE, vol. 3, no. 3, May 1986, pages 60-70, New York, US; K. SCHWAN etal.: "Specifying resource allocation for the Cm* multiprocessor"
- THE COMPUTER JOURNAL, vol. 30, no. 5, October 1987, pages 437-450, Cambridge, GB; F.W. BURTON: "Functional programming for concurrent and distributed computing"

## Description

This invention relates to multiprocessor data processing systems. The invention is particularly, although not exclusively, concerned with data processing systems of the kind referred to as parallel declarative systems. One system of this type is described, for example, in European Patent Application publication No. 301695 (C.1085).

The system described in the above European Patent Application comprises a plurality of processing elements, each of which consists of a local store and a processing unit. The workload of the system is divided into units referred to as packets, organised in a directed graph structure by means of pointers within the packets. The packets are distributed among the local stores of the processing elements, so that they can be operated in parallel by the individual processing units. Packets can be transferred from one processing element to another, by way of an interprocessor communication network.

In operation of such a system, it may be desirable to ensure that certain packets or groups of packets are localised in a particular way in the processing elements. For example, it may be desirable to ensure that a particular group of packets are all held in the same processing element, so that they can all be processed by that element without the necessity for transferring packets between the processing elements.

In the document COMPUTER, vol 19, no.8, August 1986, pages 60-70, IEEE, NY, US by Paul Hadak "Para-functional programming", annotations added to a programming language are used to direct where to evaluate expressions in a multiprocessor system.

One object of the present invention is to provide a way of achieving locality of processing within a multi-processor system.

### Summary of the invention

According to the invention there is provided a method of data processing as claimed in claim 1.

It can be seen that the invention as claimed provides the technical effect of ensuring locality of processing of specific parts of the low-level program, thereby improving the efficiency of processing by reducing the number of unnecessary inter-processor transfers and by letting the compiler decide where to execute expressions linked by a hierarchical relationship.

### Brief description of the drawings

Figure 1 is a block diagram of a multiprocessor data processing system.

Figure 2 shows the route by which programs are compiled and executed on the system.

Figure 3 is a flow chart showing part of the compilation process in more detail.

### Description of an embodiment of the invention

One data processing system in accordance with the invention as claimed will now be described by way of example with reference to the accompanying drawings.

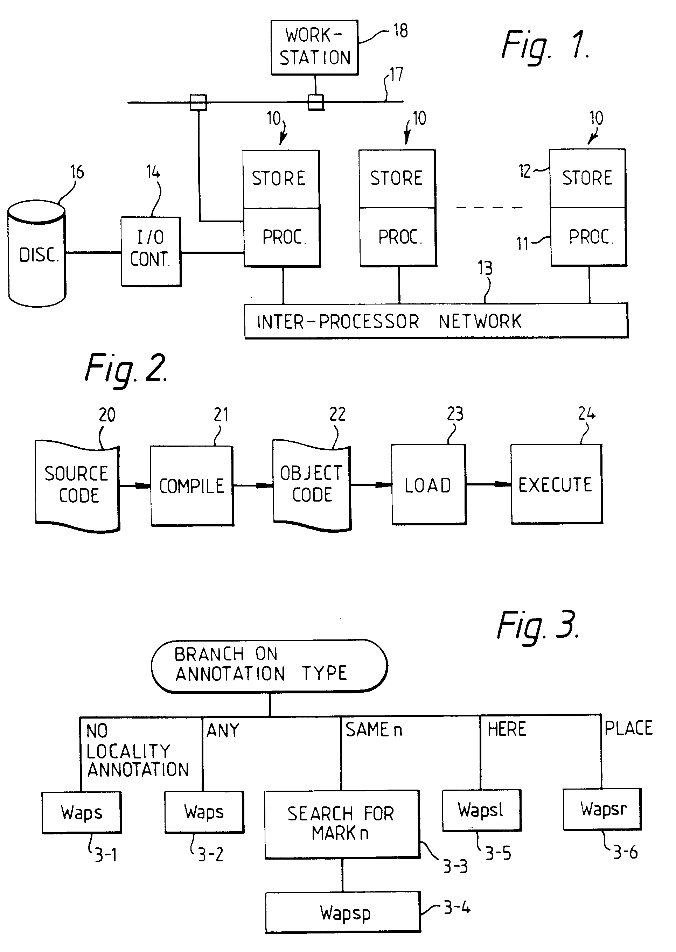

Referring to Figure 1, the data processing system comprises a plurality of processing elements 10. Each of the elements comprises a processing unit 11, and a local store 12 for holding packets to be processed. Each processing unit includes an active packet scheduler (not shown) which holds the addresses of all packets that are active within that processing element, and decides which packet is to be processed next.

The processors are interconnected by means of an inter-processor communication network 13 which allows processors to send messages and packets to each other. One of the processing elements 10 is also connected to an input/output controller 14 which is coupled to one or more peripheral devices such as disc file units 16. This processing element is also connected by way of a local area network 17 to one or more workstations 18.

For more details of the processing elements reference may be made to the above-mentioned European Patent Specification.

Referring now to Figure 2, this shows the way in which programs are compiled and executed in the system.

A source-code program 20 is initially produced in a high-level language. In the present example, this high-level language is HOPE+.

The program is then compiled 21 to produce object code 22 consisting of a set of packets as described in the above-mentioned European Patent Specification, along with various control instructions. The compilation may be a two or more stage process, involving an intermediate language such as Dactl (Declarative Alvey Compiler Target Language).

The object code generated by the compilation process is then loaded 23 into the local memories of one or more of the processing elements, for execution 24.

### Annotations in HOPE+

The HOPE+ source program contains annotations, which are attached to function declarations or to individual expressions within the program. The form of an annotation is as follows:
! @ @ body of annotation !

The annotation is placed either before the function declaration, if it applies to a function, or immediately before the expression to which it is to be attached if it applies to a function application. For example:
! @ @ body of annotation ! if a b then f attaches the annotation to the conditional expression.

The "body of annotation" contains a keyword which indicates the annotation type, and other information giving details of the annotation. Only the following four annotation types will be described herein, as illustrative of the present invention.

MARK label. This consists of the keyword MARK and a label, which is a numerical value in the range 0 to 100. This annotation is attached to an argument within an expression so as to assign a label to the processor where the argument resides. This label can then be used by other annotations to describe the relative positions of the annotated expressions. Only one expression in an equation should be given the annotation MARK n for any given label value n.

SAME label. This consists of the keyword SAME and a label in the range 0 to 100. The meaning of this annotation is as follows. If an expression E is annotated "SAME n" then:
(i) if there exists an argument A annotated "MARK n", the expression E should be evaluated on the processor in which A resides; otherwise
(ii) the annotation is ignored.

HERE. This annotation consists solely of the keyword. It indicates that the expression to which it is attached should be evaluated entirely on the processor in which it is currently being executed.

PLACE (processor, desire). This annotation consists of the keyword PLACE and two numerical values. The value "processor" is the physical processor number of the processor on which the annotated expression is to be evaluated. The value "desire" is a number in the range 0 to 255, and represents the strength of preference for that specified processor. If "desire" equals 0, this indicates that there is no preference for the specified processor, and so the expression can be evaluated anywhere. If, on the other hand, "desire" equals "255", this indicates that the expression must definitely be evaluated on the specified processor. Intermediate values of "desire" indicate different degrees of preference for the specified processor.

ANY This annotation consists solely of the keyword. It indicates that the expression to which it is attached may be executed on any processor.

### Control instructions

The following object code control instructions are generated by the compiler to control the locality of execution of the packets.

Waps (write to active packet scheduler): this indicates that the associated packet is to be sent to the active packet scheduler of any one of the processing elements. This will usually be the processing element with the lowest current activity level.

Wapsp (ptr): This indicates that the associated packet is to be sent to the active packet scheduler of the processing element indicated by the pointer (ptr).

Wapsr (pre-proc): this indicates that the associated packet is to be sent to the active packet scheduler of the processing element indicated by the preferred processor value (pre-proc).

Wapsl: this indicates that the associated packet is to be added to the local active packet scheduler; i.e. to that of the processing element in which this Wapsl instruction is executed.

### Compilation

Referring now to Figure 3, this shows the action of the compilation process when it encounters an expression in the HOPE+ source code.
(3-1&2) If the expression carries no locality annotation, or a MARK or an ANY annotation, the compiler generates a waps instruction which indicates that the packet corresponding to the annotated expression may be added to the active packet scheduler for any of the processing elements.
(3-3) When an expression E is encountered in the HOPE+ source code with the annotation SAME n, the compiler acts as follows. First, the compiler searches for another expression E in the source code containing an argument A with the annotation MARK n.
(3-4) If one is found a wapsp (ptr) instruction is generated, with ptr indicating the identity number of the processing element on which A is resident. At the same time an export inhibit bit EXPINH is set in the packet corresponding to E, to prevent that packet from being transferred to a different processing element after it has been active.
   Thus, it can be seen that the expression E will be executed on the same processing element as that in which the argument A resides.
   If any other expression or expressions with the annotation SAME n are found, then a similar wapsp instruction is generated for each of these expressions. The export inhibit bits EXPINH of all the corresponding packets are set.
   Thus, it can be seen that the expressions annotated SAME n will all be executed on the same processing element.
(3-5) In the case of a HERE annotation, a wapsl instruction is generated, to specify that the packet corresponding to the annotated expression is to be added to the local active packet scheduler. At the same time, the export inhibit bit EXPINH is set in the packet.
(3-6) When the annotation PLACE (processor, desire) is encountered, a wapsr instruction is generated. This causes the network to route the associated packet preferentially to the desired processor. However, if the desired processor is busy, the network may route the message to a different processor, if the difference between the activity levels of the processors is greater than the strength-of-preference parameter "desire". At the same time, the export inhibit bit EXPINH is set in the packet.

## Claims

1. A method of data processing in a data processing system comprising a plurality of data processing elements (10), the method comprising compiling a program (20) in a high level language into a corresponding program (22) in a low level language, and executing the low level language program on the processing elements, at least some of the expressions in the high level language program (20) having annotations associated with them containing locality information, the locality information being used to determine on which of the processing elements (10) the parts of the low level language program corresponding to the annotated expressions are to be executed, characterised in that said annotations comprise a MARK annotation and a SAME annotation, each of which includes a label, and wherein an expression carrying a SAME annotation is executed on the same processing element as an expression carrying a MARK annotation with the same label.

2. A method according to claim 1 wherein said annotations comprise a PLACE annotation which identifies a preferred processing element, on which the annotated expression is preferably to be executed.

3. A method according to claim 2 wherein the PLACE annotation also includes a strength of preference field which indicates a degree of preference for the preferred processing element.

4. A method according to any preceding claim wherein the annotations comprise a HERE annotation which indicates that the annotated expression is to be executed -in its entirety on a single processing element- processing element.

## Patentansprüche

1. Verfahren zum Verarbeiten von Daten in einem Datenverarbeitungssystem mit einer Vielzahl von Datenverarbeitungselementen (10), bei dem ein Programm (20) in einer höheren Programmsprache in ein entsprechendes Programm (22) in einer niederen Programmsprache übersetzt wird, und das Programm niederer Programmsprache auf den Verarbeitungselementen durchgeführt wird, wobei mindestens einige der Ausdrücke im Programm (20) höherer Programmsprache diesen zugeordnete Erläuterungen aufweisen, die Informationen bezüglich der Lokalität enthalten, und wobei die Lokalitätsinformationen verwendet werden, um festzulegen, auf welchen der Verarbeitungselemente (10) die Teile des Programms der niederen Programmsprache ausgeführt werden sollen, die den erläuterten Ausdrücken entsprechen , **dadurch gekennzeichnet,** daß die Erläuterungen eine MARK-Erläuterung und eine SAME-Erläuterung aufweisen, von denen jede ein Label enthält, und daß ein eine SAME-Erläuterung führender Ausdruck auf dem gleichen Verarbeitungselement wie ein Ausdruck, der eine MARK-Erläuterung mit dem gleichen Label führt, ausgeführt wird.

2. Verfahren nach Anspruch 1, bei dem die Erläuterungen eine PLACE-Erläuterung aufweisen, die ein bevorzugtes Verarbeitungselement identifiziert, auf dem der erläuterte Ausdruck vorzugsweise ausgeführt werden soll.

3. Verfahren nach Anspruch 2, bei dem die PLACE-Erläuterung ferner eine Stärke des bevorzugten Feldes einschließt, die einen Präferenzgrad für das bevorzugte Verarbeitungselement angibt.

4. Verfahren nach einem der Ansprüche 1 - 3, bei dem die Erläuterungen eine HERE-Erläuterung aufweisen, die angibt, daß der erläuterte Ausdruck in seiner Gesamtheit auf einem einzelnen Verarbeitungselement ausgeführt werden soll.

## Revendications

1. Procédé pour traiter des données dans un système de traitement de données comprenant une pluralité d'éléments de traitement de données (10), le procédé consistant à compiler un programme (20) dans un langage de niveau haut en un programme correspondant (22) dans un langage de niveau bas, et à exécuter le programme dans un langage de niveau bas dans les éléments de traitement, au moins certaines des expressions du programme dans un langage de niveau haut (20) auxquelles sont associées des annotations contenant des informations de lieu, les informations de lieu servant à déterminer dans lequel des éléments de traitement (10) doivent être exécutées les parties du programme dans un langage de niveau bas correspondant aux expressions annotées, caractérisé en ce que lesdites annotations comprennent une annotation REPERE et une annotation MEME dont chacune inclut une référence, et dans lequel une expression comportant une annotation MEME est exécutée dans le même élément de traitement qu'une expression comportant une annotation REPERE avec la même référence.

2. Procédé selon la revendication 1, dans lequel lesdites annotations comprennent une annotation EMPLACEMENT qui indique un élément de traitement préféré, dans lequel l'expression annotée doit être exécutée de préférence.

3. Procédé selon la revendication 2, dans lequel l'annotation EMPLACEMENT inclut aussi une zone d'intensité de préférence qui indique un degré de préférence pour l'élément de traitement préféré.

4. Procédé selon l'une quelconque des revendications 1 à 3, dans lequel les annotations comprennent une annotation ICI qui indique que l'expression annotée doit être exécutée dans son intégralité dans un seul élément de traitement.
